# EUROPÄISCHE PATENTANMELDUNG

(11) **EP 0 948 003 A1**
(43) Veröffentlichungstag der Anmeldung: **06.10.1999**
(21) Anmeldenummer: 99102674.1
(22) Anmeldetag: 12.02.1999
(51) Int. Cl.: H01G 2/04

(54) **Halterung für einen Kondensatorbecher**

(30) Priorität: 02.04.1998 DE 19814747
(71) Anmelder: Brökelmann, Jaeger & Busse GmbH & Co, D-59755 Arnsberg (DE)
(72) Erfinder: Henrici, Dieter Dipl.-Ing., 59757 Arnsberg (DE); Wedding, Hans, 59759 Arnsberg (DE)
(74) Vertreter: Patentanwälte Ostriga & Sonnet

(57) **Zusammenfassung**

Die Erfindung betrifft eine Halterung (10) für einen im wesentlichen kreiszylindrischen Kondensatorbecher (12) zu dessen Festlegung an einem Geräteteil wie Leuchtenblech mit einem Halter (11), der Befestigungsmittel zur Fixierung am Geräteteil und Kupplungsmittel zu seiner Anordnung am Kondensatorbecher aufweist. Die Aufgabe der Erfindung besteht darin, eine Halterung für einen Kondensatorbecher zu schaffen, die weiterhin einen rollenden Transport sowie eine rollende Bedruckung von Kondensatorbechern ermöglicht und deren Halter universell für unterschiedliche Kondensatorbecherdimensionen verwendbar ist. Die erfindungsgemäße Halterung ist besondere dadurch gekennzeichnet, daß die Kupplungsmittel des Halters wenigstens einen Kupplungsansatz (17) und der Kondensatorbecher zu dessen Eingriff mindestens einen dazu im wesentlichen formkomplementären Rücksprung (18) bezüglich seiner Zylindermantelfläche aufweisen und daß Kuplungsansatz (17) und Rücksprung (18) mit korrespondierenden Rückhalteflächen eine in wenigstens radialer Richtung zugfeste Kupplungsanordnung ausbilden.

## Beschreibung

Die Erfindung betrifft eine Halterung für einen im wesentlichen kreiszylindrischen Kondensatorbecher zu dessen Festlegung an einem Geräteteil wie Leuchtenblech mit einem Halter, der Befestigungsmittel zur Fixierung am Geräteteil und Kupplungsmittel zu seiner Anordnung am Kondensatorbecher aufweist.

Der Stand der Technik umfaßt zunächst eine Halterung für einen im wesentlichen kreiszylindrischen Kondensatorbecher, der zur Festlegung an einem Geräteteil, beispielsweise einem Leuchtenblech keinen zusätzlichen Halter benötigt, sondern lediglich einen an den Boden des Kondensatorbechers angeformten Gewindezapfen umfaßt. Nachteilig ist hier ein relativ hoher Montageaufwand, da für die Festlegung des Kondensatorbechers am Leuchtenblech zumindest eine zusätzliche Federscheibe und eine Mutter anzubringen sind. Außerdem muß eine Lasche zur Aufnahme des Gewindezapfens im Leuchtenblech ausgestellt werden.

Weiterhin ist durch offenkundige Vorbenutzung ein Kondensatorbecher bekanntgeworden, der über angeformte federnde Füße verfügt. Diese sind entweder durch eine einteilige Ausbildung als Spritzgießteil von vornherein stoffschlüssig an den Kondensatorbecher angebunden oder bei einer zweiteiligen Ausführung im nachhinein per Ultraschall an die Außenmantelfläche des Kondensatorbechers angeschweißt. Abgesehen davon, daß ein nachträglicher Anschweißvorgang äußerst aufwendig ist, besteht bei der einteiligen Ausführung der Nachteil, daß der Kondensatorbecher mit den angeformten Füßen nicht mehr rollbar ist und somit weder rollend transportiert noch rollend bedruckt werden kann.

Darüberhinaus ist eine Halterung für einen Kondensatorbecher bekannt, bei der ein Halter mit Rastfüßen an der Kondensatorklemme, also an dem Deckel für den Kondensatorbecher befestigt wird. Die Kondensatorklemme umfaßt Führungen für die elektrischen Zuleitungen zum Kondensator und dient dem sicheren Verschluß des Kondensatorbechers. Durch Anordnung des Halters an der Kondensatorklemme erfolgt die Kraftübertragung vom Kondensatorbecher zum Geräteteil somit über die Schnittstelle Kondensatorbecher/Anschlußklemme, wodurch diese Verbindung stark beansprucht wird. Zusätzlich ist die Lage des Rastfußes aufgrund seiner außermittigen Position bezüglich des Kondensatorbodens ungünstig und erzeugt ein nachteiliges Kippmoment des Kondensatorbechers.

Bei einer weiteren Halterung für einen Kondensatorbecher ist vorgesehen, den Kalter mittels selbstklebender Folien am Kondensatorbecher festzulegen. Dazu weist der Mantel des Kondensatorbechers eine etwa tangential angeformte Haftfläche für die Folie auf. Deshalb läßt sich auch dieser Kondensatorbecher nicht rollend bearbeiten. Im übrigen sind sowohl die mechanische Befestigung als auch die Handhabung problematisch bzw. unzuverlässig.

Eine weitere bekannte Halterung für Kondensatorbecher, von der die vorliegende Erfindung ausgeht, sieht eine im wesentlichen kreisringförmige Binde mit daran angeformten Rastfüßen vor, die auf den Kondensatorbecher aufgeschoben werden kann und diesen umschließt. Hier stellt sich das Problem, daß für jeden Kondensatorbecherdurchmesser ein einzelner, in seinen Dimensionen darauf abgestimmter Halter vorhanden sein muß, was eine große Zahl von unterschiedlichen Einzelteilen und deren Lagerhaltung erforderlich macht. Außerdem ist die Verbindung zwischen dem Halter und dem Kondensatorbecher unzuverlässig.

Der Erfindung liegt hiervon ausgehend die Aufgabe zugrunde, eine Halterung für einen Kondensatorbecher gemäß dem Oberbegriff des Anspruchs 1 zu schaffen, die weiterhin einen rollenden Transport sowie eine rollende Bedruckung von Kondensatorbechern ermöglicht und deren Halter universell für unterschiedliche Kondensatorbecherdimensionen verwendbar ist.

Die Erfindung löst diese Aufgabe mit den Merkmalen des Anspruchs 1, und ist insbesondere dadurch gekennzeichnet, daß die Kupplungsmittel des Halters wenigstens einen Kupplungsansatz und der Kondensatorbecher zu dessen Eingriff mindestens einen dazu im wesentlichen formkomplementären Rücksprung bezüglich seiner Zylindermantelfläche aufweisen und daß Kupplungsansatz und Rücksprung mit korrespondierenden Rückhalteflächen eine in wenigstens radialer Richtung zugfeste Kupplungsanordnung ausbilden.

Das Prinzip der Erfindung besteht somit im wesentlichen darin, die Kupplungsmittel derart auszubilden, daß keine Werkstoffbereiche des Kondensatorbechers über dessen Kreisumfang hinaus vorstehen, so daß der Kondensatorbecher frei rollbar ist. Dies wird vorteilhaft erreicht durch Anordnung von Rücksprüngen oder Einschnürungen zum Inneren des Kondensatorbechers hin. Andererseits umfaßt der Halter vorspringende Kupplungsansätze zum Eingriff in die Rücksprünge am Kondensatorbecher. Da der Rücksprung an Kondensatorbechern mit beliebigen Durchmessern anordenbar ist, kann ein einziger Halter universell für unterschiedliche Kondensatorbechergrößen verwendet werden.

Gemäß einer vorteilhaften Ausführungsform sind der Kupplungsansatz leistenförmig und der Rücksprung nutförmig ausgebildet und Kupplungsansatz und Rücksprung sind nach Art einer Schiebeführung ineinander schiebbar. Dies ermöglicht eine besonders einfache und sichere zusammenführende Montage der beiden Teile, so z.B. auch das Einschieben des Kondensatorbechers an einen bereits am Geräteteil fixierten Halter ohne großen Kraftaufwand.

Gemäß einer weiteren Ausgestaltung der Erfindung verläuft die Längsachse des Rücksprungs parallel zu der Längsachse des Kondensatorbechers. Daraus resultiert insbesondere die Möglichkeit einer einfachen sowie stabilen axialen Positionierung des Kondensatorbechers relativ zum Halter, da die axiale Länge des Rucksprungs im Prinzip frei gewählt werden kann und somit große Bereiche für Rückhalteflächen zur Verfügung stehen.

Gemäß einer weiteren vorteilhaften Ausgestaltung der Erfindung umfaßt der Halter zwei Kupplungsansätze und der Kondensatorbecher zu deren Eingriff zwei umfangsversetzte Rücksprünge. Dies ermöglicht eine besonders sichere und stabile Befestigung des Kondensatorbechers am Halter.

Der Angriff des Halter mittels zweier Kupplungsansätze an voneinander distanzierten Umfangsstellen des Kondensatorbechers hat darüber hinaus den Vorteil, daß durch die beabstandete Anordnung der Kupplungsansätze ein Maß definiert ist, nach dem sich die Anordnung der Rücksprünge an Kondensatorbechern unterschiedlicher Durchmesser einheitlich richtet. Die Rücksprünge werden entsprechend diesem Maß an Kondensatorbechern aller gängigen Durchmesser angeordnet.

Zusätzlich können Anlagekanten am Halter vorgesehen sein, die universell für die Außenmantelflächen von Kondensatorbechern unterschiedlicher Durchmesser ausgebildet sind. Die Anlagekanten sind dabei vorteilhaft in einem Abstand voneinander angeordnet, der im wesentlichen dem Abstand der Kupplungsansätze voneinander entspricht. Sie befinden sich in einer gegenüber den Kupplungsansätzen axial versetzten Position an dem Halter. Die Anlagekanten sorgen auf diese Weise für eine stabile und sichere Abstützung der Kondensatorbecher unterschiedlicher Durchmesser am Halter.

Gemäß einer weiteren vorteilhaften Ausgestaltung der Erfindung umfaßt der Halter in Richtung seiner Längsmittelachse zwei Abschnitte, wobei sich die Kupplungsansätze nur über die axiale Länge des ersten Abschnittes erstrecken. Dies ermöglicht einerseits eine materialsparende Ausbildung des Halters. Andererseits können die nutförmigen Rücksprünge am Kondensatorbecher axial relativ kurz gehalten werden, wodurch eine Behinderung des im Kondensatorbecher angeordneten Kondensatorwickels vollständig ausgeschlossen ist. Darüber hinaus kann trotzdem ein im Bereich des zweiten Abschnittes angeordnetes Befestigungsmittel des Halters, beispielsweise ein Rastfuß, etwa mittig bezüglich des Kondensatorbechers positioniert werden.

Zusätzliche vorteilhafte Ausgestaltungen und Weiterbildungen der Erfindung sind Gegenstand der nicht zitierten Unteransprüche. Im übrigen wird die Erfindung insgesamt aus der nachfolgenden ausführlichen Erläuterung eines in den Zeichnungen dargestellten Ausführungsbeispiels besonders deutlich. In den Zeichnungen zeigen:
- Fig. 1: in Schrägansicht von unten eine erfindungsgemäße Halterung mit einem Halter, auf den ein Kondensatorbecher vollständig aufgeschoben ist,
- Fig. 2: einen Schnitt durch den Kondensatorbecher gemäß Schnittlinie II-II in Fig. 1,
- Fig. 3: den Halter aus Fig. 1 ohne Kondensatorbecher in Schrägansicht von oben,
- Fig. 4: den Halter im Schnitt gemäß Schnittlinie IV-IV in Fig. 3,
- Fig. 5 bis 7: in Ansicht den Halter gemäß Fig. 3 mit drei angedeuteten Kondensatorbechern unterschiedlicher Durchmesser, wobei die Flächen des Halters, an denen die Außenmantelfläche des jeweiligen Kondensatorbechers anliegt, schwarz gefärbt sind, und
- Fig. 8: den Halter in Ansicht gemäß Ansichtspfeil VIII-VIII in Fig. 3 mit fünf angedeuteten Kondensatorbechern unterschiedlicher Durchmesser.

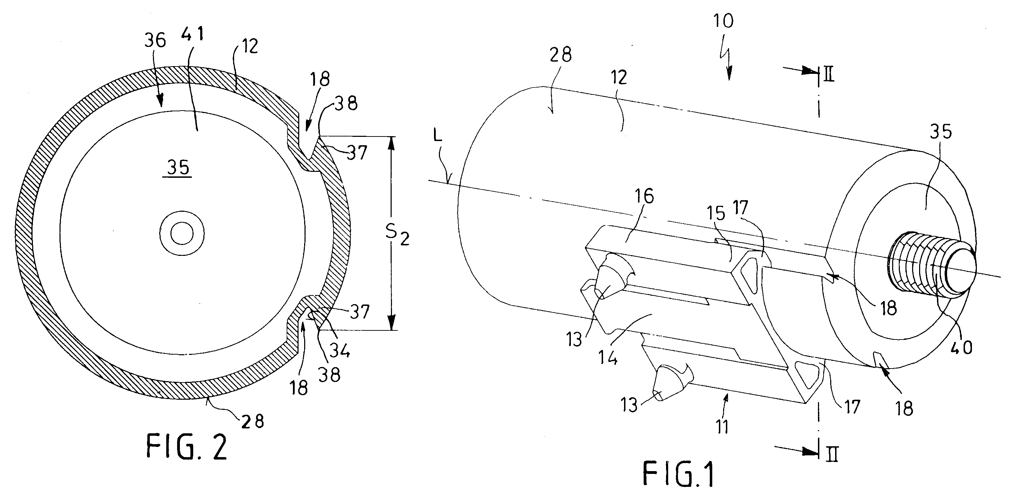

Die beispielsweise in Fig. 1 insgesamt mit 10 bezeichnete Halterung umfaßt einen Kalter 11 zur Festlegung eines im wesentlichen kreiszylindrischen Kondensatorbechers 12 an einem nicht gezeigten Geräteteil, beispielsweise einem Geräte- oder Leuchtenblech. Der Halter 11 umfaßt Rastfüße 13, die in korrespondierende Öffnungen im Leuchtenblech eingesteckt werden, darin verrasten und den Halter 11 bezüglich des Leuchtenbleches fest und positioniert anordnen.

Die Rastfüße 13 sind unterhalb einer Basis 14 des Halters 11 angeordnet, auf der die weiteren Bestandteile des Halters 11 aufbauen.

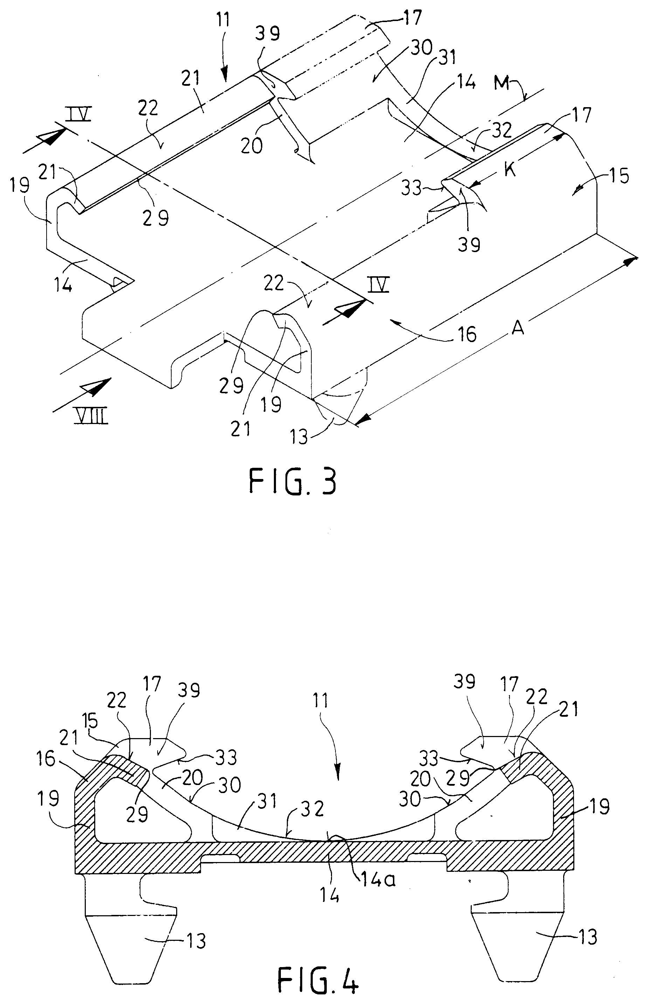

Bezüglich seiner Längsmittelachse M (Fig. 3) läßt sich der Halter 11 in zwei axial aufeinanderfolgende Abschnitte 15, 16 unterteilen. Der erste Abschnitt 15 des Halters 11 umfaßt dabei die Kupplungsansätze 17 zum Eingriff in Rücksprünge 18 am Kondensatorbecher 12 als weitere Bestandteile der Halterung 10. Die Kupplungsansätze 17 sind mit der Basis 14 einstückig stoffschlüssig einerseits über Wandabschnitte 19 sowie andererseits über Werkstoffbereiche 20 des Halters 11 verbunden.

Die Wandabschnitte 19 erstrecken sich im wesentlichen über die gesamte axiale Länge A des Halters 11, wohingegen die Werkstoffbereiche 20 entsprechend der axialen Länge K der Kupplungsansätze 17 lediglich im ersten Abschnitt 15 des Halters 11 vorgesehen sind.

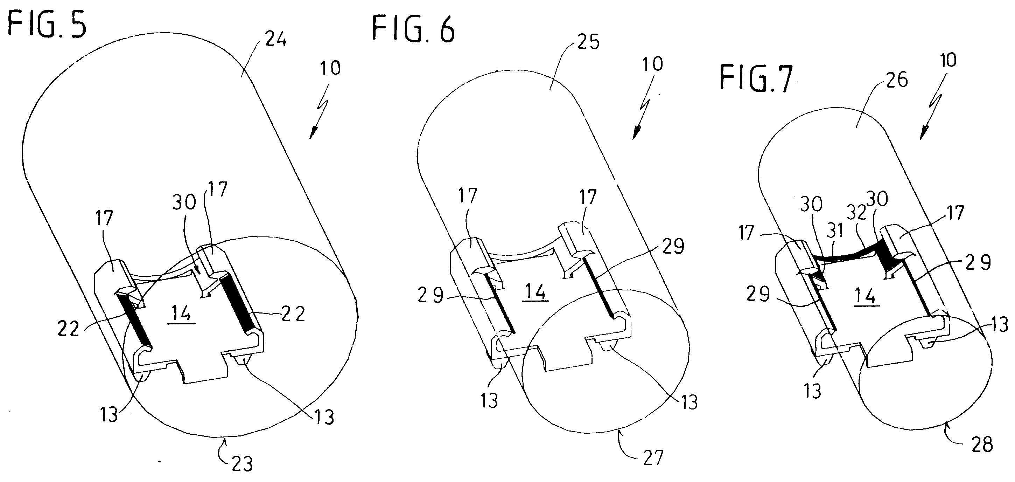

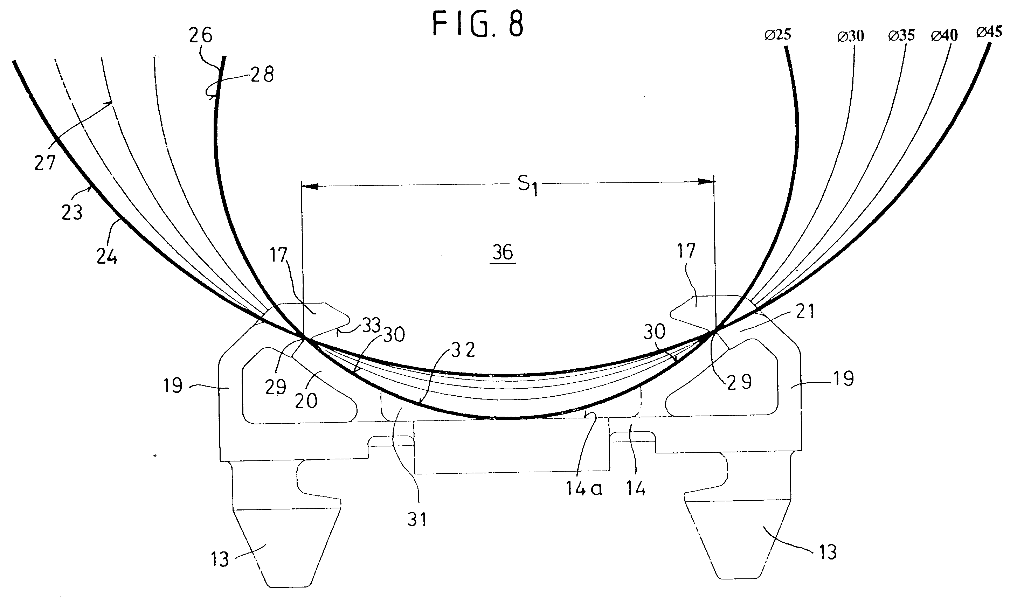

An den Wandabschnitten 19 des zweiten Abschnitts 16 des Halters 11 sind Fortsätze 21 angeordnet, die eine erste Gruppe von gekrümmten Anlageflächen 22 zur Verfügung stellt. Diese Anlageflächen 22 weisen eine Krümmung auf, die der Krümmung der Außenmantelfläche 23 des Kondensatorbechers 24 mit einem maximalen Durchmesser (siehe Fig. 5, Fig. 8) entspricht. Im Durchmesser kleinere Kondensatorbecher 25, 26 (Fig. 6, Fig. 7, Fig. 8) liegen mit ihrer entsprechenden Außenmantelfläche 27, 28 im Bereich des zweiten Abschnittes 16 des Halters 11 lediglich im Bereich des freien Randes 29 der Fortsätze 21 am Halter 11 an.

Die Werkstoffbereiche 20 des ersten Abschnittes 15 des Halters 11 stellen eine zweite Gruppe von Anlageflächen 30 mit einer anderen Krümmung zur Verfügung. Diese Krümmung entspricht im wesentlichen der Krümmung der Außenmantelfläche 28 eines im Durchmesser minimalen Kondensatorbechers 26 (Fig. 7, Fig. 8). Dieser in Fig. 7 mit der Bezugsziffer 26 bezeichneten kleinste Kondensatorbecher entspricht dem in Fig. 1 mit 12 bezeichneten Kondensatorbecher. Zusätzlich ist ein Ringsegment 31 an dem gemäß Fig. 3 hinteren, rechten Ende des Halters 11 angeordnet, das mit seiner Anlagefläche 32 die Anlageflächen 30 der Werkstoffbereiche 20 miteinander verbindet. Die Bedeutung der Anlageflächen 22, 30, 32 für die unterschiedlichen Kondensatorbecherdimensionen wird später erläutert.

Die Kupplungsansätze 17 stehen bezüglich des Kreisumfanges eines von den Anlageflächen 30, 32 definierten Kreises nach innen vor. Die Kupplungsansätze 17 sind klauen- oder krallenartig ausgebildet und umfassen jeweils eine Haltefläche 33, die eine entsprechende Rückhaltefläche 34 (Fig. 6) des Rücksprungs 18 im zusammengesteckten Zustand von Halter 11 und Kondensatorbecher 12 hintergreift.

Beim Zusammenstecken von Kondensatorbecher 12 und Halter 11 gleitet der Kondensatorbecher 12 mit seinem dem Boden 35 nahen Bereich seiner Außenmantelfläche 23, 27, 28 zunächst auf dem zweiten Abschnitt 16 des Halters 11. Erst wenn der Boden 35 des Kondensatorbechers 12 den zweiten Abschnitt 15 erreicht, greifen die Kupplungsansätze 17 in die dafür vorgesehenen Rücksprünge 18 am Kondensatorbecher 12 ein. Da für die beiden Kupplungsansätze 17 nur zwei Rücksprünge 18 vorgesehen sind, dienen die vorgenannten Elemente 17, 18 zugleich zur Umfangspositionierung des Kondensatorbechers 12 relativ zum Halter 11. Der Kondensatorbecher 12 wird soweit auf den Halter aufgeschoben, bis eine an den Kupplungsansätzen 17 in Einschubrichtung vorn angeordnete Einschub-Begrenzungsfläche 39 mit den entsprechenden Gegenflächen am Grund der Nuten 18 in Anschlag kommt. Die nutförmigen Rücksprünge 18 sind zum Boden 35 hin offen ausgebildet. Dies ist vorteilhaft beim Entformen des Kondensatorbechers 12 sowie beim Montieren von Halter 11 und Kondensatorbecher 12.

Die Kupplungsansätze 17 ragen bei der gewählten Anordnung einerseits weit genug über den Kreisumfang des zylindrischen Kondensatorbechers 12 hinaus in den Innenraum 36 jedes Kondensatorbechers 12, 24, 25, 26 hinein, so daß genügend große Flächenbereiche von Halteflächen 33 und Rückhalteflächen 34 aneinander anliegen und eine sichere, zugfeste Verbindung von Halter 11 und Kondensatorbecher 12 miteinander gewährleisten. Andererseits ragen die Rücksprünge 18 nicht soweit in den Innenraum 36 eines Kondensatorbechers 12 hinein, als daß sie dort das Einbringen eines nicht gezeigten Kondensatorwickels behindern könnten oder Komplikationen bezüglich eines eingebrachten Kondensatorwickels mit sich brächten. Die Rücksprünge 18 sind darüber hinaus in der Nähe des Bodens 35 des Kondensatorbechers 12 angeordnet, so daß sie sich weit entfernt von elektrischen Zuleitungen wie Kabel oder ähnlichen befinden und auch in dieser Hinsicht keinerlei Probleme auftreten können. Die bodennahe Anbringung der Rücksprünge 18 hat darüber hinaus den Vorteil, daß eine hauptsächlich im dem Boden 35 fernen Bereich des Kondensatorbechers 12 seine Außenmantelfläche 28 etwa zur Bedruckung ununterbrochen vorliegt.

Die nutförmigen Rücksprünge 18 sind zwar gemäß Fig. 1 axial länger ausgebildet als die Kupplungsansätze 17 mit ihrer axialen Länge K. Sie sind jedoch trotzdem axial relativ kurz gehalten und reichen beispielsweise lediglich über etwa ein Drittel der gesamten axialen Länge eines Kondensatorbechers 12.

Durch die geschickte Anordnung der beiden Abschnitte 15 und 16 und insbesondere durch die Anordnung der Rastfüße 13 im Bereich des zweiten Abschnittes 16 gelingt es, die Rastfüße 13 etwa mittig bezogen auf die axiale Länge des Kondensatorbechers 12, also nahe am Schwerpunkt des Kondensatorbechers 12 zu positionieren und auf diese Weise eine einfache, stabile Konstruktion zu schaffen, die kein hohes Kippmoment aufweist. Durch die axial relativ kurz gehaltenen Kupplungsansätze 17 wird außerdem der Werkstoffeinsatz für den Halter 11 minimiert.

Die Rücksprünge 18 sind bezüglich der Längsachse L des Kondensatorbechers 12 unter einem kleinen spitzen Winkel angeordnet, wobei sich ihr Abstand zueinander zum Boden 35 hin geringfügig verändert. Diese geringe Konizität wird aus den Zeichnungen nicht deutlich. Sie beträgt etwa 1° und entspricht damit der für die Entformung wichtigen Entformungsschräge. Die Kondensatorbecher bestehen in der Regel aus relativ weichen Kunststoffen wie Thermoplasten. Der im Gegensatz dazu aus einem härteren Kunststoff wie Polycarbonat bestehende Halter 11 erreicht durch die Konizität der Rücksprünge 18 zueinander einen sicheren klemmschlüssigen Preßsitz. Selbstverständlich kann auch vorgesehen sein, die Kupplungsansätze 17 zueinander konisch auszurichten.

Die vorgesehene geringe Konizität von 1° hat zum einen zur Folge, daß der Kondensatorbecher 12 mit sehr geringem Kraftaufwand auf den Halter 11 aufgeschoben werden kann und zum anderen ein dauerhaft sicherer Sitz erreicht ist.

Die Funktion der verschiedenen Anlageflächen 22, 30, 32 in Zusammenwirkung mit Kondensatorbechern 24, 25, 26 unterschiedlicher Größe läßt sich am besten anhand der Fig. 8 in Verbindung mit den Fig. 5 bis 7 veranschaulichen. Gemäß Fig. 8 ragen die Kupplungsansätze 17 bezüglich des jeweiligen Kreisumfangs unterschiedlich weit in den Innenraum 36 eines Kondensatorbechers 12, 24, 25, 26 hinein. Die Haltefläche 33 der Kupplungsansätze 17 befindet sich jedoch bei allen aufgesteckten Kondensatorbechern 24, 25, 26 vollständig innerhalb des durch die jeweilige Außenmantelfläche 23, 27, 28 definierten Kreisumfangs.

Die heute üblichen Kondensatorbecherdurchmesser betragen, wie in Fig. 8 gezeigt, 25 bis 45 mm mit jeweiligen Rastermaßabständen von 5 mm. Der kleinste Kondensatorbecher 26 liegt mit seiner Außenmantelfläche 28 auf den Anlageflächen 30 und 32 auf und berührt darüber hinaus den freien Rand 29 der Anlageflächen 22. Außerdem liegt der kleinste Kondensatorbecher an der Innenfläche 14a der Basis 14 an. Der Kondensatorbecher 24 mit maximalem Durchmesser (45 mm) liegt satt auf den Anlageflächen 22 auf. Die Kondensatorbecher mit Durchmessern, die größer sind als der Minimaldurchmesser aber kleiner als der Maximaldurchmesser, also Kondensatorbecher gemäß Fig. 6 oder entsprechend Fig. 8 mit Durchmessern von 30, 35 oder 40 mm liegen zwar weder satt auf den Anlageflächen 22 noch satt auf den Anlageflächen 30, 32 auf. Sie kommen jedoch alle auf den freien Rändern 29 der Fortsätze 21 des zweiten Abschnitts 16 zum Aufliegen und erfahren auf diese Weise eine stabile Unterstützung.

Somit kommen Kondensatorbecher 12, 24, 25, 26 aller gängiger Größen über einen axial relativ großen Bereich zur Auflage, was für Kondensatorbecher aller Größen eine sehr stabile und kippsichere Kupplung zwischen Kondensatorbecher 12 und Halter 11 ermöglicht.

Durch den Abstand der beiden freien Ränder 29 der Fortsätze 21 voneinander wird ein sekantiales Stichmaß S₁ (Fig. 8) definiert, das die entscheidende Bezugsgröße für die Anordnung der Rücksprünge 18 am Kondensatorbecher 12 ist. Die durch die Rücksprünge 18 gebildeten nasenartigen Vorsprünge 37 der Wandbereiche des Kondensatorbechers 12 enden in jeweils einer freien Randkante 38 (Fig. 2), deren Abstand zueinander ein Stichmaß S₂ definiert, das im wesentlichen dem sekantialen Stichmaß S₁ entspricht bzw. geringfügig kleiner ist als dieses. Das Stichmaß S₂ ist bei Kondensatorbechern aller unterschiedlicher Durchmesser im wesentlichen dasselbe.

Die beim Ausführungsbeispiel vorgesehene Schiebeführung für den Zusammenbau von Kondensatorbecher 12 und Halter 11 kann prinzipiell auch alternativ oder zusätzlich so ausgelegt sein, daß diese beiden Teile sich in etwa radialer Richtung aufeinander zu miteinander verclipsen lassen. Dafür müssen lediglich Werkstoffbereiche des Halters 11 oder/und des Kondensatorbechers 12, beispielsweise die Kupplungansätze 17 selbst, aus Materialien bestehen, die eine vorübergehende Verformung des Werkstoffbereichs ermöglichen.

Die erfindungsgemäße Halterung 10 hat gegenüber dem Stand der Technik weiterhin den Vorteil, daß der Halter 11 eine sehr geringe Bauhöhe aufweist und daher wenig Raum für Lagerung und Transport benötigt. Außerdem ist beim Ausführungsbeispiel die Ausbildung des Halters 11 vorteilhaft so getroffen, daß - wie insbesondere aus Fig. 8 ersichtlich - seine Breite den Durchmesser des kleinsten Kondensatorbechers nicht überschreitet, wodurch zusätzlicher Einbauraum nicht erforderlich ist.

Für die Befestigung des Halters 11 insbesondere am Leuchtenblech, können die im Stand der Technik bekannten Befestigungsöffnungen für Rastfüße 13 verwendet werden. Außerdem können die erfindungsgemäß mit Rücksprüngen 18 versehenen Kondensatorbecher 12, 24, 25, 26 weiterhin mit im Stand der Technik bekannten Halterungen befestigt werden, z.B. mit den ringförmigen Binden. Auch kann, wie in Fig. 1 gezeigt, am Kondensatorbecher 12 weiterhin ein Gewindezapfen 40 vorgesehen sein.

## Patentansprüche

1. Halterung (10) für einen im wesentlichen kreiszylindrischen Kondensatorbecher (12, 24, 25, 26) zu dessen Festlegung an einem Geräteteil wie Leuchtenblech mit einem Halter (11), der Befestigungsmittel (13) zur Fixierung am Geräteteil und Kupplungsmittel zu seiner Anordnung am Kondensatorbecher (12, 24, 25, 26) aufweist, dadurch gekennzeichnet, daß die Kupplungsmittel des Halters (11) wenigstens einen Kupplungsansatz (17) und der Kondensatorbecher (12, 24, 25, 26) zu dessen Eingriff mindestens einen dazu im wesentlichen formkomplementären Rücksprung (18) bezüglich seiner Zylindermantelfläche (23, 27, 28) aufweisen und daß Kupplungsansatz (17) und Rücksprung (18) mit korrespondierenden Rückhalteflächen (33, 34) eine in zumindest radialer Richtung zugfeste Kupplungsanordnung ausbilden.

2. Halterung nach Anspruch 1, dadurch gekennzeichnet, daß der Kupplungsansatz (17) leistenförmig und der Rücksprung (18) nutförmig ausgebildet und Kupplungsansatz (17) und Rücksprung (18) nach Art einer Schiebeführung ineinander schiebbar sind.

3. Halterung nach Anspruch 2, dadurch gekennzeichnet, daß die Längsachse des Rücksprungs (18) zu der Längsachse (L) des Kondensatorbechers (12, 24, 25, 26) im wesentlichen parallel verläuft.

4. Halterung nach Anspruch 1, dadurch gekennzeichnet, daß der Halter (11) zwei Kupplungsansätze (17) und der Kondensatorbecher (12, 24, 25, 26) zu deren Eingriff zwei umfangsversetzte Rücksprünge (18) umfaßt.

5. Halterung nach Anspruch 4, dadurch gekennzeichnet, daß die Kupplungsansätze (17) bezüglich der Längsmittelachse (M) des Halters (11) symmetrisch angeordnet, klauenartig ausgebildet und aufeinander zu gerichtet sind.

6. Halterung nach einem der vorhergehenden Ansprüche, dadurch gekennzeichnet, daß der Halter (11) in Richtung seiner Längsmittelachse (M) zwei Abschnitte (15, 16) umfaßt und sich die Kupplungsansätze (17) nur über die axiale Länge (K) des ersten Abschnittes (15) erstrecken.

7. Halterung nach Anspruch 6, dadurch gekennzeichnet, daß am zweiten Abschnitt (16) des Halters (11) Anlagekanten (29) für die Außenmantelflächen (27, 28) von Kondensatorbechern (12, 24, 25, 26) unterschiedlicher Durchmesser ausgebildet sind.

8. Halterung nach Anspruch 7, dadurch gekennzeichnet, daß die Anlagekanten (29) in einem Abstand (S₁) voneinander beabstandet sind, der ein Maß (S₂) für die Anordnung der Rücksprünge (18) ist, die in übereinstimmender Zuordnung Kondensatorbechern (12, 24, 25, 26) unterschiedlicher Durchmesser angeordnet sind.

9. Halterung nach Anspruch 7 oder 8, dadurch gekennzeichnet, daß die Anlagekanten an Anlageflächen (22) ausgebildet sind, die entsprechend dem Außenumfang (28) eines ersten Kondensatorbechers (24) mit großem Durchmesser konkav gewölbt sind.

10. Halterung nach Anspruch 6, dadurch gekennzeichnet, daß am ersten Abschnitt (15) des Halters (11) eine zweite Gruppe von Anlageflächen (30, 32) angeordnet ist, die entsprechend dem Außenumfang (28) eines im Durchmesser kleinsten Kondensatorbechers (26) konkav gewölbt sind.

11. Halterung nach einem der Ansprüche 4 bis 10, dadurch gekennzeichnet, daß die beiden Kupplungsansätze (17) bezüglich der Längsmittelachse (M) des Halters (11) und/oder die Rücksprünge (18) bezüglich der Längsachse des Kondensatorbechers (12, 24, 25, 26) sowie zueinander geringfügig schräg verlaufen.

12. Halterung nach Anspruch 6, dadurch gekennzeichnet, daß die beiden Abschnitte (15, 16) des Halters (11) von einer Einschub-Begrenzungsfläche (39) voneinander getrennt sind, die mit am Grund der nutförmigen Rücksprünge (18) vorgesehenen Gegenflächen zusammenwirkt.

13. Halterung nach Anspruch 6, dadurch gekennzeichnet, daß die Befestigungsmittel (13) des Halters (11) zur Fixierung am Geräteteil im Anfangsbereich des zweiten Abschnitts (16) angeordnet sind.

14. Halterung nach einem der vorhergehenden Ansprüche, dadurch gekennzeichnet, daß der Abstand (S₁) der Anlagekanten (29) kleiner ist als der Durchmesser des kleinsten Kondensatorbechers (12; 26).

15. Halterung nach einem der vorhergehenden Ansprüche, dadurch gekennzeichnet, daß die Breite des Halters (11) nicht größer ist als der Durchmesser des kleinsten Kondensatorbechers (12, 26).

16. Halterung nach einem der vorhergehenden Ansprüche, dadurch gekennzeichnet, daß der Halter (11) aus einem härteren Material, wie z.B. aus Polycarbonat, hergestellt ist als der beispielsweise aus einem thermoplastischen Kunststoff gefertigte Kondensatorbecher (12, 24, 25, 26).
